# EUROPEAN PATENT APPLICATION

(11) **EP 2 166 800 A1**
(43) Date of publication of application: **24.03.2010**
(21) Application number: 08164803.2
(22) Date of filing: 22.09.2008
(51) Int. Cl.: H04W 48/20

(54) **Method and a device for enabling a mobile terminal to access to a wireless cellular telecommunication network**

(71) Applicant: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: BRUNEL, Loïc, 35708, RENNES Cedex 7 (FR); GRESSET, Nicolas, 35708, RENNES Cedex 7 (FR); KHANFOUCI, Mourad, 35708, RENNES Cedex 7 (FR); BONNEVILLE, Hervé, 35708, RENNES Cedex 7 (FR)
(74) Representative: Maillet, Alain

(57) **Abstract**

The present invention concerns a method for enabling a mobile terminal to access to a wireless cellular telecommunication network. The method comprises the steps of:
- detecting the reception of a message transferred by the mobile terminal to a base station (S650,S600),
- determining if the base station which received the message is identified in a first list (S651,S601) of at least one base station or in a second list (S653,S603) of at least one base station,
- giving to the mobile terminal access right to the wireless cellular telecommunication network through the base station which received the message if the base station which received the message is identified in the second list and if one base station identified in the first list is not operational (S654,S655,S604,S605),
- rejecting the access right to the mobile terminal to the wireless cellular telecommunication network through the base station which received the message if the base station which received the message is identified in the second list and if one base station identified in the first list is operational (S654,S657,S604,S608).

## Description

The present invention relates generally to a method and a device for enabling a mobile terminal to access to a wireless cellular telecommunication network comprising plural base stations.

Wireless cellular telecommunication networks are largely deployed but they are still some areas not covered by the base stations of the wireless cellular telecommunication network.

For example, the access to the wireless cellular telecommunication network is not possible for a mobile terminal located in a building, the signals radiated by the base stations being too attenuated.

Solutions are proposed today. Particular base stations, like home base stations or femto base stations provide coverage areas within the buildings.

These home base stations enable a limited number of mobile terminals to access to the wireless cellular telecommunication network through their respective resources in order to maintain their quality of service or to provide the desired service to their terminals or both. The terminals allowed to access the resources of the network may be determined by the holder of the base station, the network or a combination of both.

For example, only mobile terminals of the holder of the home base station and its family can access to the wireless cellular telecommunication network through the home base station. These mobile terminals are associated to the home base station. Other mobile terminals cannot access to the wireless cellular telecommunication network through the home base station. The other mobile terminals are not associated to the home base station.

When a home base station is not operational, for example when the home base station is powered off, broken, or disconnected from the telecommunication network, the mobile terminal which is associated to the home base station cannot access to the wireless cellular telecommunication network through another home base station as the mobile terminal is not allowed to access to the wireless cellular telecommunication network through the other home base station.

If the mobile terminal attempts to access to the wireless cellular telecommunication network through the other home base station, the wireless cellular telecommunication network rejects the mobile terminal as there is no relationship between the terminal and the other home base station.

The present invention aims at allowing that a mobile terminal, which is associated to a base station like a home base station, gets access to the wireless cellular telecommunication network even if the base station it is associated with is not operational.

To that end, the present invention concerns a method for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the method comprises the steps of :
- detecting the reception of a message transferred by the mobile terminal to a base station through which the mobile terminal requests access to the wireless cellular telecommunication network,
- determining if the base station which received the message is identified in a first list of at least one base station through which the mobile terminal can access to the wireless cellular telecommunication network or in a second list of at least one base station through which the mobile terminal can access to the wireless cellular telecommunication network,
- giving to the mobile terminal access right to the wireless cellular telecommunication network through the base station which received the message if the base station which received the message is identified in the second list and if each base station identified in the first list and through which the mobile terminal should access to the wireless cellular telecommunication network is not operational,
- rejecting the access right to the mobile terminal to the wireless cellular telecommunication network through the base station which received the message if the base station which received the message is identified in the second list and if at least one base station identified in the first list and through which the mobile terminal should access to the wireless cellular telecommunication network is operational.

The present invention concerns also a device for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the device for enabling a mobile terminal to access to a wireless cellular telecommunication network comprises :
- means for detecting the reception of a message transferred by the mobile terminal to a base station through which the mobile terminal requests access to the wireless cellular telecommunication network,
- means for determining if the base station which received the message is identified in a first list of at least one base station through which the mobile terminal can access to the wireless cellular telecommunication network or in a second list of at least one base station through which the mobile terminal can access to the wireless cellular telecommunication network,
- means for giving to the mobile terminal access right to the wireless cellular telecommunication network through the base station which received the message if the base station which received the message is identified in the second list and if each base station identified in the first list and through which the mobile terminal should access to the wireless cellular telecommunication network is not operational,
- means for rejecting the access right to the mobile terminal to the wireless cellular telecommunication network through the base station which received the message if the base station which received the message is identified in the second list and if at least one base station identified in the first list and through which the mobile terminal should access to the wireless cellular telecommunication network is operational.

Thus, the mobile terminal can access to the wireless cellular telecommunication network even if the base station through which the mobile terminal should access to the wireless cellular telecommunication network is not operational and if the radio-link quality allows to communicate with another base station.

Furthermore, by enabling the mobile terminal to access to the resources of the base station which received the message only when each base station through which the mobile terminal should access to the wireless cellular telecommunication network is not operational, the access to the wireless cellular telecommunication network through the base station which received the message is limited to particular conditions.

According to a particular feature, the first list comprises plural base stations and the method comprises further step of determining the at least one base station of the first list which is not operational and through which the mobile terminal should access to the wireless cellular telecommunication network, by reading information identifying the at least one base station which is not operational in the message received by the base station or using information representative of the neighbouring between the base station which received the message and base stations identified in the first list.

Thus, the access right is selective and the mobile terminal gets access right only to the base station identified in the second list when the mobile terminal is in the vicinity of each base station identified in the first list and which is not operational.

The access right to the base station of the second list is activated when problems are detected with the base stations identified in the first list.

According to a particular feature, the wireless cellular telecommunication network comprises a core network device and the present invention is executed by the core network device.

Thus, the burden put on the base stations is limited and no communication channel between home base stations is needed.

According to a particular feature, the present invention is executed by the base station which receives the message.

Thus, load is distributed among base stations and the impact on the core network is limited.

According to a particular feature, the method comprises further step of determining, for the mobile terminal, the second list of at least one base station through which the mobile terminal can access to the wireless cellular telecommunication network, and the determination step of the second list is executed by the core network device or by at least one base station identified in the first list.

Thus, each second list is adapted for the mobile terminal. The core network device or at least one base station identified in the first list may determine the second list from neighbourhood of the base stations of the first list that can be reached by the mobile terminal.

According to a particular feature, the method comprises further step, executed by at least one base station of transferring a message indicating that the base station gives to the mobile terminal access right to the wireless cellular telecommunication network if each base station identified in the first list and through which the mobile terminal should access to the wireless cellular telecommunication network is not operational.

According to still another aspect, the present invention concerns a method for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the method comprises the steps, executed by the mobile terminal of :
- checking if signals that may be transferred by at least one base station through which the mobile terminal should access to the wireless cellular telecommunication network are received, the at least one base station being identified in a first list identifying at least one base station through which the mobile terminal should access to the wireless cellular telecommunication network,
- measuring signals transferred by at least one base station identified in a second list of at least one base station through which the mobile terminal can access to the wireless cellular telecommunication network,
- transferring a message to one base station identified in the second list which transfers measured signals if the signals that may be transferred by the at least one base station identified in the first list through which the mobile should access to the wireless cellular telecommunication network are not received, the message requesting an access right to the wireless cellular telecommunication network through the base station to which the message is transferred,
- accessing to the wireless cellular telecommunication network through the base station to which the message is transferred.

The present invention also concerns a device for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the device enabling a mobile terminal to access to a wireless cellular telecommunication network is included in the mobile terminal and comprises:
- means for checking if signals that may be transferred by at least one base station through which the mobile terminal should access to the wireless cellular telecommunication network are received, the at least one base station being identified in a first list identifying at least one base station through which the mobile terminal should access to the wireless cellular telecommunication network,
- means for measuring signals transferred by at least one base station identified in a second list of at least one base station through which the mobile terminal can access to the wireless cellular telecommunication network,
- means for transferring a message to one base station identified in the second list which transfers measured signals if the signals that may be transferred by the at least one base station identified in the first list through which the mobile should access to the wireless cellular telecommunication network are not received, the message requesting an access right to the wireless cellular telecommunication network through the base station to which the message is transferred,
- means for accessing to the wireless cellular telecommunication network through the base station to which the message is transferred.

Thus, the mobile terminal can access to the wireless cellular telecommunication network even if the at least one base station through which the mobile terminal should access to the wireless cellular telecommunication network is not operational.

According to a particular feature, the method comprises further step, executed prior to the access to the wireless cellular network of receiving a message allowing the mobile terminal to access to the wireless cellular telecommunication network through the base station to which the message is transferred.

According to a particular feature, the method comprises further step of determining, by the mobile terminal, the second list of at least one base station through which the mobile terminal can access to the wireless cellular telecommunication network.

According to a particular feature, the mobile terminal determines the second list of at least one base station through which the mobile terminal can access to the wireless cellular telecommunication network by identifying each base station which transfers a message indicating that the mobile terminal may have access right to the wireless cellular telecommunication network through the base station which transfers the message if each base station identified in the first list and through which the mobile terminal should access to the wireless cellular telecommunication network is not operational.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a mobile terminal in which the present invention is implemented ;
Fig. 3 is a diagram representing the architecture of a core network device in which the present invention is implemented ;
Fig. 4 is a diagram representing the architecture of a base station in which the present invention is implemented ;
Fig. 5 discloses an example of an algorithm executed by a mobile terminal in order to attempt to access to the wireless cellular telecommunication network according to the present invention ;
Fig. 6a discloses an example of an algorithm executed by a core network device in order to check if a mobile terminal may access to the wireless cellular telecommunication network according to the present invention ;
Fig. 6b discloses an example of an algorithm executed by a base station in order to check if a mobile terminal may access to the wireless cellular telecommunication network according to the present invention ;
Fig. 7 discloses an example of an algorithm executed by a base station in order to determine a second list of at least one base station according to the present invention ;
Fig. 8 discloses an example of an algorithm executed by a core network device in order to determine a second list of at least one base station according to the present invention ;
Fig. 9 discloses an example of an algorithm executed by a mobile terminal in order to determine a second list of at least one base station according to the present invention.

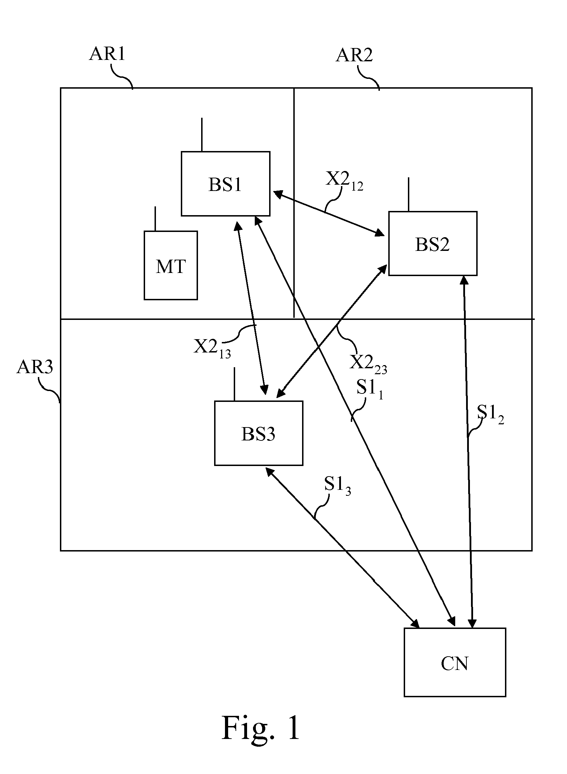

**Fig. 1** represents a wireless cellular telecommunication network in which the present invention is implemented.

In Fig. 1, three base stations BS1, BS2 and BS3 of a wireless cellular telecommunication network are shown.

The base stations BS are for example femto base stations BS. Femto base stations are for example located into homes and enable mobile terminals MT which are allowed to use the resources of a femto base station BS to access to the wireless cellular telecommunication network. Femto base stations BS are also named home base stations BS.

Classically, only the mobile terminal MT of the owner of a femto base station BS is allowed to use the resources of the femto base station BS in order to access to the wireless cellular telecommunication network.

The base stations BS may be for example pico base stations or micro base stations.

A base station and a mobile terminal MT which is allowed to access to the wireless cellular telecommunication network through the base station BS are associated.

The mobile terminals MT belonging to the family or friends of the owner of the femto base station BS may be allowed to use the resources of the femto base station BS in order to access to the wireless cellular telecommunication network.

Other mobile terminals are not allowed to use the resources of the femto base station BS in order to access to the wireless cellular telecommunication network. A mobile terminal MT which is not allowed to access to the wireless cellular telecommunication network through the femto base station BS is not associated to the femto base station BS.

When the base station BS1 is not operational, for example when the base station BS1 is powered off, broken, is in an operating mode wherein the base station BS1 does not transfer signals, or disconnected from the telecommunication network, the mobile terminal MT cannot access to the wireless cellular telecommunication network through another base station BS2 or BS3 as the mobile terminal is not allowed to access to the wireless cellular telecommunication network through the base stations BS2 and BS3.

According to the invention, each mobile terminal MT has a first and a second list of at least one base station BS through which the mobile terminal MT is able to access to the wireless cellular telecommunication network.

The first list of at least one base station BS is the list which identifies the base station BS or base stations BS the mobile terminal MT has to use in priority in order to access to the wireless cellular telecommunication network. The first list of at least one base station BS identifies the base station or base stations BS which is or are associated to the mobile terminal MT.

The second list of at least one base station BS is the list which identifies the base station BS or base stations BS the mobile terminal MT has to use in order to access to the wireless cellular telecommunication network when the mobile terminal MT cannot access to the wireless cellular telecommunication network through any base station BS identified in the first list.

The base station BS1 is located in the area AR1 and the mobile terminal MT can access to the wireless cellular telecommunication network through the resources of the base station BS1. The base station BS1 is identified in the first list of the mobile terminal MT. The mobile terminal MT is associated to the base station BS1. For example, the base station BS1 and the mobile terminal MT belong to the same owner.

The base station BS2 is located in the area AR2. The mobile terminal MT can access to the wireless cellular telecommunication network through the resources of the base station BS2 if the base station BS1 is not operational. The base station BS2 is identified in the second list of the mobile terminal MT.

The base station BS3 is located in the area AR3. The mobile terminal MT cannot access to the wireless cellular telecommunication network through the resources of the base station BS3. The base station BS3 is not identified in the first or the second list of the mobile terminal MT.

The signals transferred by the base station BS1 are received by any mobile terminal MT located in the areas AR1, AR2 or AR3. The signals transferred by the base station BS2 are received by any mobile terminal MT located in the areas AR1, AR2 or AR3. The signals transferred by the base station BS3 are received by any mobile terminal MT located in the areas AR1, AR2 or AR3.

For example, the signals transferred by the base station BS2 and measured by the mobile terminal MT have a power level higher than the signals transferred by the base station BS3 and measured by the mobile terminal MT.

The areas AR1 to AR3 are for example apartments in a building.

The mobile terminal MT can then receive the signals transferred by the base stations BS1, BS2 and BS3.

Each base station BS1 to BS3 is connected to a core network device CN of the wireless cellular telecommunication network through a telecommunication network not shown in Fig. 1.

The base station BS1 is linked to the core network device CN through the link S1₁ established on the telecommunication network.

The base station BS2 is linked to the core network device CN through the link S1₂ established on the telecommunication network.

The base station BS3 is linked to the core network device CN through the link S1₃ established on the telecommunication network.

The base station BS1 may be linked to the base station BS2 through the link X2₁₂ established on the telecommunication network.

The base station BS1 may be linked to the base station BS3 through the link X2₁₃ established on the telecommunication network.

The base station BS2 may be linked to the base station BS3 through the link X2₂₃ established on the telecommunication network.

According to the invention, for each mobile terminal MT, a first and a second list are determined.

According to the invention, each base station BS or the core network device :
- detects the reception of a message transferred by the mobile terminal to a base station through which the mobile terminal requests access to the wireless cellular telecommunication network,
- determines if the base station which received the message is identified in a first list of at least one base station through which the mobile terminal can access to the wireless cellular telecommunication network or in a second list of at least one base station through which the mobile terminal can access to the wireless cellular telecommunication network,
- gives to the mobile terminal access right to the wireless cellular telecommunication network through the base station which received the message if the base station which received the message is identified in the second list and if each base station identified in the first list and through which the mobile terminal should access to the wireless cellular telecommunication network is not operational,
- rejects the access right to the mobile terminal to the wireless cellular telecommunication network through the base station which received the message if the base station which received the message is identified in the second list and if at least one base station identified in the first list and through which the mobile terminal should access to the wireless cellular telecommunication network is operational.

A base station BS through which the mobile terminal MT should access to the wireless cellular telecommunication network is a base station BS that is located in the vicinity of the mobile terminal MT.

It has to be noted here that in a particular mode of realisation of the invention, the second list is formed by the mobile terminal by collecting messages transferred by base stations which allow the mobile terminal MT to access to the wireless cellular telecommunication network through their resources when each base station BS identified in the first list through which the mobile terminal should access to the wireless cellular telecommunication network is not operational.

The messages transferred by these base stations BS may be transferred to the mobile terminal MT or may be transferred to the base stations BS identified in the first list of the mobile terminal MT or may be transferred to the core network device CN.

The message transferred to the mobile terminal MT may be signalled for example through a flag in the broadcast channel of these base stations BS.

When a mobile terminal MT accesses to the wireless cellular telecommunication network, the mobile terminal MT can establish or receive a communication with a remote telecommunication device and/or can download data and/or can notify to the core network device CN that a base station BS identified in its first list of at least one base station is not operational and/or can request the core network device CN to wake up the base station BS which is not operational.

Information identifying a base station BS may identify uniquely the base station BS among all the base stations BS of the wireless cellular telecommunication network or may identify uniquely the base station BS among a limited number of base stations BS of the wireless cellular telecommunication network, for example the base stations BS located within a given area.

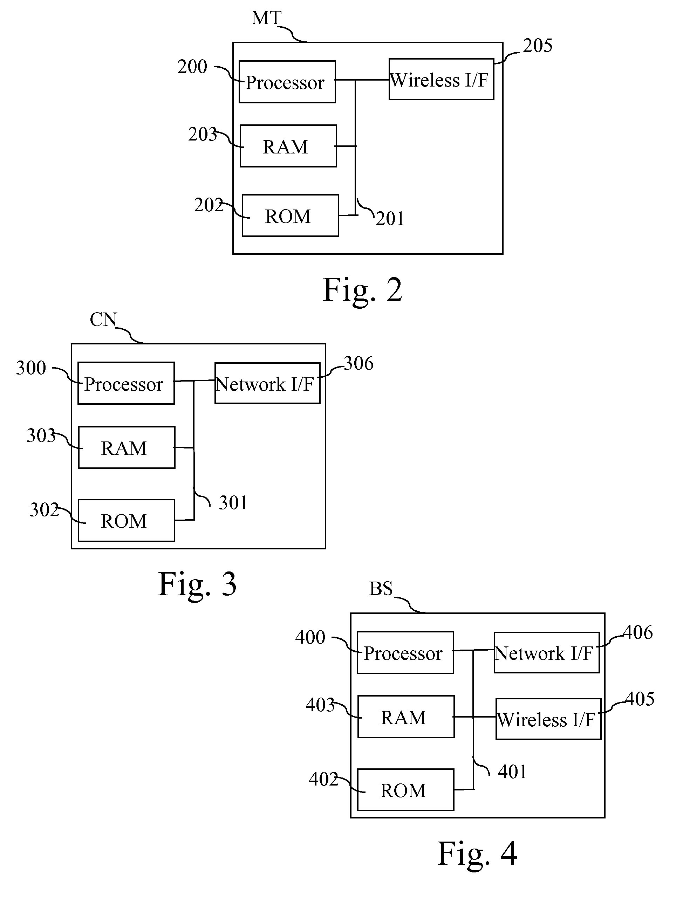

**Fig. 2** is a diagram representing the architecture of a mobile terminal in which the present invention is implemented.

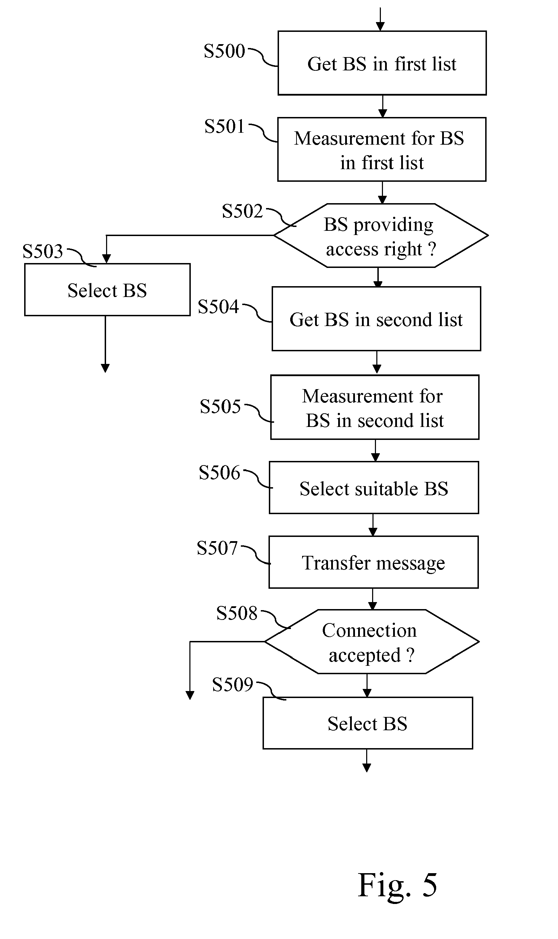

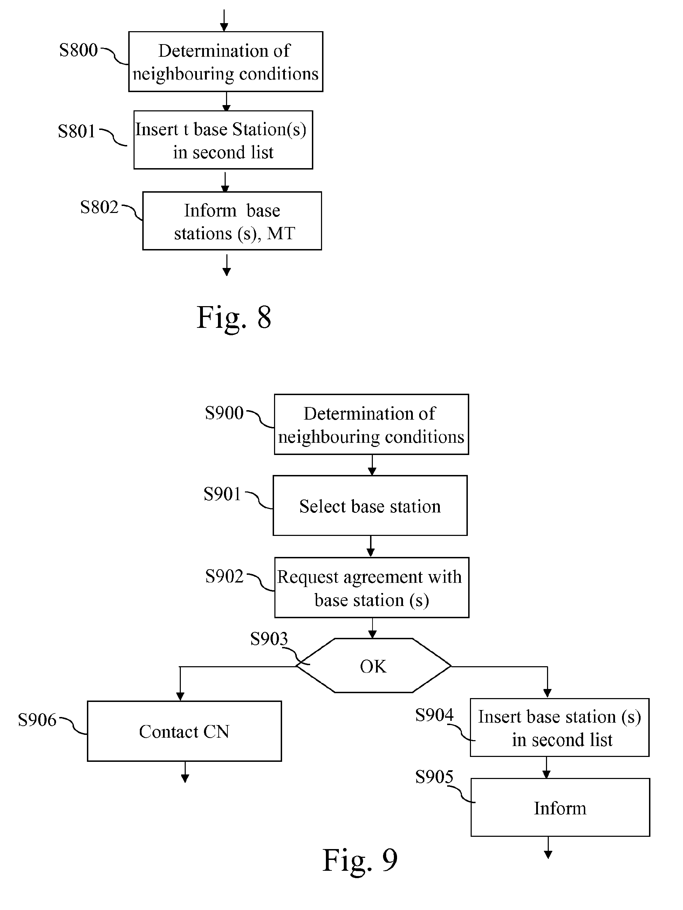

The mobile terminal MT has, for example, an architecture based on components connected together by a bus 201 and a processor 200 controlled by the programs as disclosed in Figs. 5 and 9.

The bus 201 links the processor 200 to a read only memory ROM 202, a random access memory RAM 203 and a wireless interface 205.

The memory 203 contains registers intended to receive variables and the instructions of the programs as disclosed in Figs. 5 and 9.

The memory 203 memorises the first and second lists according to the present invention.

The memory 203 may memorise information representative of the position of the base stations BS identified in the first list of the mobile terminal MT.

The memory 203 may memorise information representative of the neighbouring conditions of the base stations BS identified in the first list of the mobile terminal MT.

The processor 200 controls the operation of the wireless interface 205.

The read only memory 202 contains instructions of the programs as disclosed in Figs. 5 and 9, which are transferred, when the mobile terminal MT is powered on, to the random access memory 203.

The wireless interface 205 enables the mobile terminal MT to transfer and/or receive signals or messages to/from the base stations BS.

The wireless interface 205 comprises means for measuring or detecting the signals transferred by the base stations BS.

The mobile terminal may comprise a Global Navigation Satellite System module like a Global Positioning System module not shown in Fig. 2.

**Fig. 3** is a diagram representing the architecture of a core network device in which the present invention is implemented.

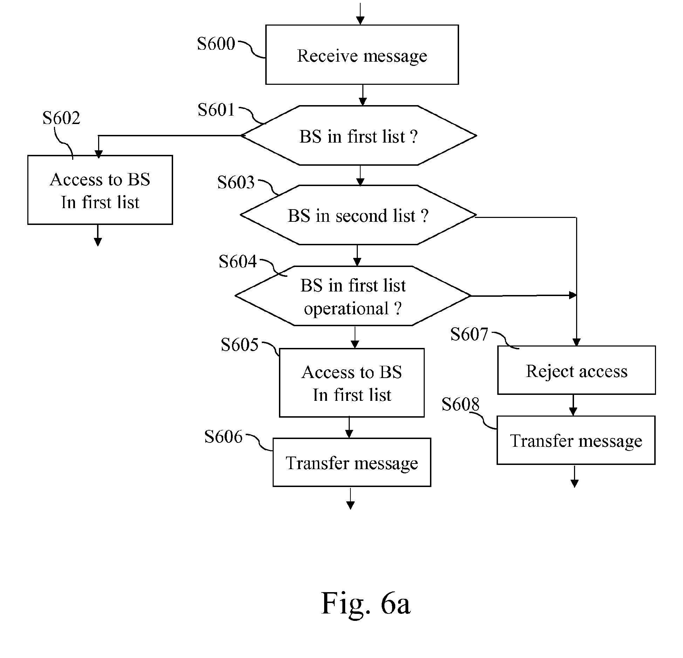

The core network device CN has, for example, an architecture based on components connected together by a bus 301 and a processor 300 controlled by the programs as disclosed in Figs. 6a and 8.

The bus 301 links the processor 300 to a read only memory ROM 302, a random access memory RAM 303 and a network interface 306.

The memory 303 contains registers intended to receive variables and the instructions of the programs related to the algorithms as disclosed in Figs. 6a and 8.

The memory 303 may comprise the first and second lists of each mobile terminal MT.

The memory 303 may comprise representative of the neighbouring conditions of the base stations BS.

The processor 300 controls the operation of the network interface 306.

The read only memory 302 contains instructions of the programs related to the algorithms as disclosed in Figs. 6a and 8, which are transferred, when the core network device CN is powered on, to the random access memory 303.

The core network device CN may be connected to a telecommunication network not shown in Fig. 1 through the network interface 306. For example, the network interface 306 is a DSL (Digital Subscriber Line) modem, or an ISDN (Integrated Services Digital Network) interface, etc. Through the network interface 306, the core network device CN may transfer or receive messages to at least one base station BS.

Messages are transferred through links S 1 established on the telecommunication network between the core network device CN and the base stations BS.

**Fig. 4** is a diagram representing the architecture of a base station in which the present invention is implemented.

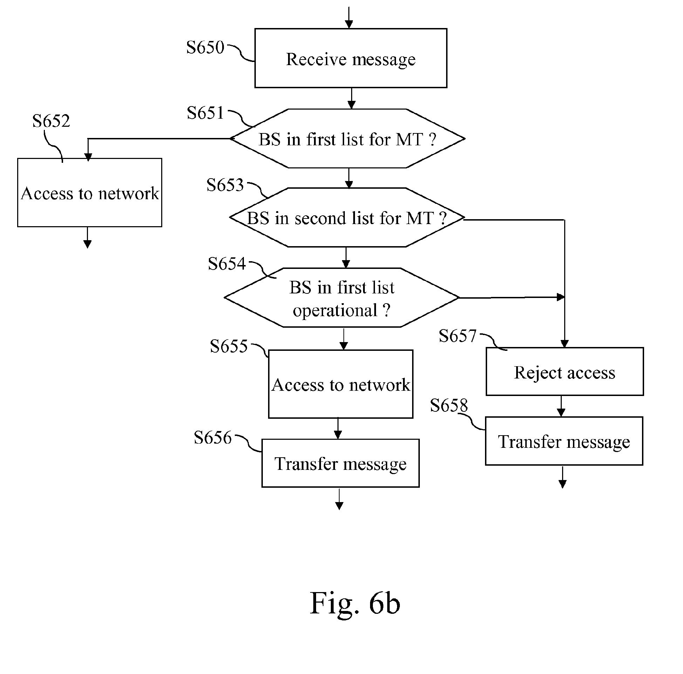

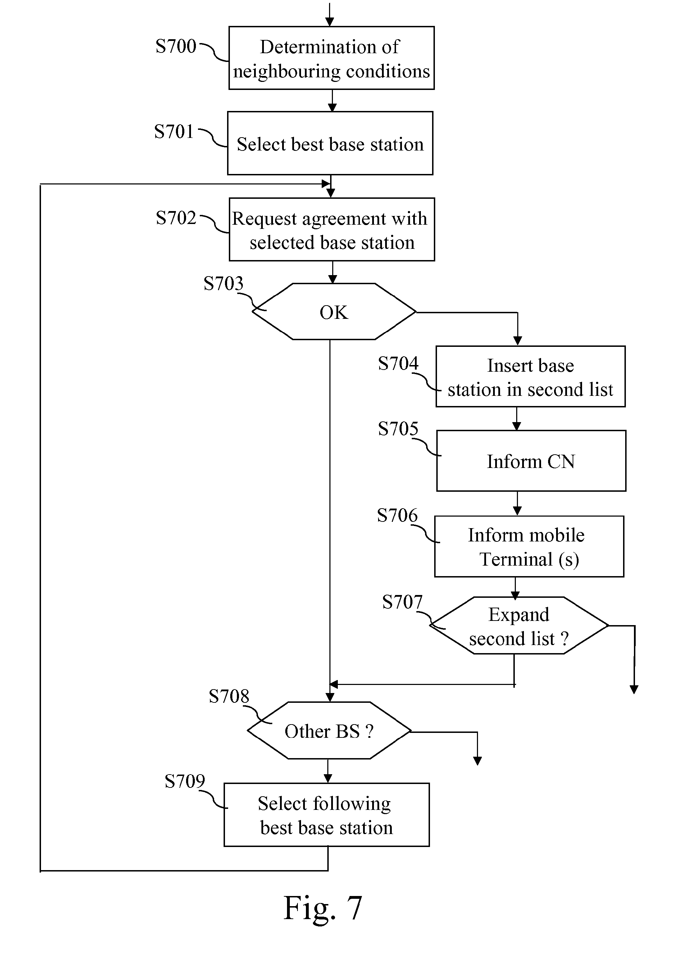

The base station BS has, for example, an architecture based on components connected together by a bus 401 and a processor 400 controlled by the programs as disclosed in Figs. 6b or 7.

The bus 401 links the processor 400 to a read only memory ROM 402, a random access memory RAM 403, a wireless interface 405 and a network interface 406.

The memory 403 contains registers intended to receive variables and the instructions of the programs related to the algorithms as disclosed in Figs. 6b or 7.

The memory 403 may comprise information identifying each base station BS which is identified in the first list of each mobile terminal MT of which the base station BS is identified in the second list.

The memory 403 may comprise representative of the neighbouring conditions of the base stations BS.

The processor 400 controls the operation of the network interface 406 and of the wireless interface 405.

The read only memory 402 contains instructions of the programs related to the algorithm as disclosed in Figs. 6b or 7, which are transferred, when the base station BS is powered on, to the random access memory 403.

The base station BS may be connected to a telecommunication network through the network interface 406. For example, the network interface 406 is a DSL (Digital Subscriber Line) modem, or an ISDN (Integrated Services Digital Network) interface, etc. Through the network interface 406, the base station BS may transfer messages to the core network device CN or to other base stations BS or may receive messages from other base stations BS or from the core network device CN.

The messages are transferred through links S1 or X2 established on the telecommunication network between the base station BS and the core network device CN or between the base station BS and other base stations BS.

The network interface 406 comprises means for transferring messages allowing a mobile terminal to access to the wireless cellular telecommunication network through the resources of the base station BS when each base station identified in the first list of the mobile terminal MT and through which the mobile terminal MT should access to the wireless cellular telecommunication network is not operational.

The wireless interface 405 and the network interface 406 are the resources of the base station BS used by a mobile terminal MT in order to access to the wireless telecommunication network when the mobile terminal MT establishes or receives a communication with a remote telecommunication device.

The wireless interface 405 comprises means for transferring messages allowing the mobile terminal to access to the wireless cellular telecommunication network through the resources of the base station BS when each base station BS identified in the first list of the mobile terminal MT and through which the mobile terminal should access to the wireless cellular telecommunication network is not operational.

These messages may be signalled for example through a flag in the broadcast channel of these base stations BS.

**Fig. 5** discloses an example of an algorithm executed by a mobile terminal in order to attempt to access to the wireless cellular telecommunication network according to the present invention.

More precisely, the present algorithm is executed by the processor 200 of the mobile terminal MT.

At step S500, the processor 200 gets a first list of at least one base station BS through which the mobile terminal MT is allowed to access to the wireless cellular telecommunication network. The first list of at least one base station BS through which the mobile terminal MT is allowed to access to the wireless cellular telecommunication network is for example memorized in the RAM memory 203.

The first list of at least one base station BS comprises at least one identifier of a base station BS and/or comprises information enabling the mobile terminal MT to synchronize on signals transferred by the at least one base station BS.

At next step S501, the processor 200 commands the wireless interface 205 to proceed to some measurements of signals which may be transferred by at least one base station BS identified in the first list. In other words, the wireless interface 205 detects if the base station BS1 is operational, i.e. transfers signals.

At next step S502, the processor 200 checks if the signals transferred by at least one base station BS identified in the first list are upper than a predetermined threshold. In other words, the processor 200 checks if the signals that may be transferred by the base station BS1 identified in the first list can be detected.

If the first list comprises a single base station BS, the wireless interface 205 checks if that base station BS transfers signals.

If the list of at least one base station BS comprises plural base stations BS, the wireless interface 205 measures each signal transferred by the base stations BS comprised in the first list and by the base stations BS which are neighbour of the base stations BS comprised in the first list. The mobile terminal MT, by measuring the signals transferred by neighbour base stations BS of a base station BS identified in the first list, is able to determine its location and which base station BS identified in the first list the mobile terminal MT is close to.

In a variant, the wireless interface 205 measures each signal transferred by the base station BS comprised in the first list which is the closest from the mobile terminal MT location, the mobile terminal MT location being determined for example by geo-location techniques as GNSS or radio finger print.

A radio fingerprint characterises the radio signals received in a given location. A radio fingerprint may be a list of base station identifiers or the result of measurements on signals received at a location. By comparing a fingerprint with fingerprints memorized in a database, it is possible to determine the location of the mobile terminal MT.

If the signals transferred by one base station BS identified in the first list are upper than the predetermined threshold, the processor 200 moves to step S503 and selects that base station BS as the base station BS through which the mobile terminal MT can access to the wireless cellular telecommunication network, i.e. can establish or receive a communication.

After that, the processor 200 interrupts the present algorithm.

If the mobile terminal MT is close to the base station BS1 identified in the first list and if the signals transferred by that base station BS1 are not upper than the predetermined threshold, it means that the base station BS1 is not operational, the processor 200 moves to step S504.

At step S504, the processor 200 gets a second list of at least one base station BS through which the mobile terminal MT may access to the wireless cellular telecommunication network when the base station BS1 identified in the first list and through which the mobile terminal MT should access to the wireless cellular telecommunication network is not operational. The second list is for example memorized in the RAM memory 203.

At next step S505, the processor 200 commands the wireless interface 205 to proceed to some measurements of signals which may be transferred by at least one base station BS identified in the second list.

In a variant, the steps S501 and S505 are executed simultaneously. According to that variant, the processor 200 commands the wireless interface 205 to proceed to some measurements of signals which may be transferred by any base station BS.

From the measurements, the processor 200 determines at step S502 if there is at least one base station BS identified in the first list which transfers signals measured at a level upper than the predetermined threshold.

If there is one base station BS identified in the first list which transfers signals measured at a level upper than the predetermined threshold, the processor 200 moves to step S503.

Otherwise, the processor 200 moves to step S506.

At next step S506, the processor 200 selects a base station BS identified in the second list.

The processor 200 selects for example, the base station BS2 which is identified in the second list and which transfers the signals which are received by the mobile terminal MT with the highest power strength among the measured signals and/or selects the base station BS identified in the second list which has the lowest working load and/or selects the base station BS identified in the second list and which transfers the signals which are received by the mobile terminal MT with the highest quality.

At next step S507, the processor 200 commands the transfer of a message to the selected base station BS2.

The message is representative of a request to get the rights to use the resource of the base station BS2 in order to get access to the wireless cellular telecommunication network.

The message may be also representative of a notification of the absence of a base station BS1 through which the mobile terminal MT may access to the wireless cellular telecommunication network.

The message may be also a message notifying the fact that the base station BS1 identified in a first list through which the mobile terminal MT may access to the wireless cellular telecommunication network is not operational.

The message may or may not comprise information enabling the identification of the base station BS 1 which is not operational.

At next step S508, the processor 200 checks if, in response to the message transferred at step S507, a message is received allowing the use of the resource of the base station BS2 by the mobile terminal MT in order to access to the wireless cellular telecommunication network.

If a message is received allowing the mobile terminal MT to use the resource of the base station BS2 in order to access to the wireless cellular telecommunication network, the processor 200 moves to step S509. Otherwise, the processor 200 interrupts the present algorithm.

At step S509, the base station BS2 is selected. The selected base station BS2 is the base station BS through which the mobile terminal MT can access to the wireless cellular telecommunication network.

The mobile terminal MT can, through the base station BS2, establish or receive a communication with a remote telecommunication device and/or can download data and/or can notify to the core network device CN that the base station BS1 identified in its first list of at least one base station is not operational and/or can request the core network device CN to wake up the base station BS1 which is not operational.

**Fig. 6a** discloses an example of an algorithm executed by a core network device in order to check if a mobile terminal may access to the wireless cellular telecommunication network according to the present invention.

More precisely, the present algorithm is executed by the processor 300 of the core network device CN.

At step S600, the processor 300 detects the reception of a message transferred by a base station BS.

The message is transferred by the base station BS in response to the message transferred by the mobile terminal MT at step S507 of Fig. 5.

According to the example given in reference to Fig. 5, the message is transferred by the base station BS2.

The message may be representative of a request to get the rights to use the resource of the base station BS2 in order to enable the mobile terminal MT to access to the wireless cellular telecommunication network.

The message may be representative of a notification of the absence of a base station BS1 through which the mobile terminal MT is allowed to access to the wireless cellular telecommunication network.

The message may be a message notifying the fact that the base station BS1 identified in the first list of the mobile terminal MT is not operational.

The message may or may not comprise information enabling the identification of the base station BS 1 which is not operational.

At next step S601, the processor 300 checks if the base station BS which transferred the message received at step S600 is identified in the first list of at least one base station BS through which the mobile terminal MT which sent the message at step S507 of Fig. 5 is allowed to access to the wireless cellular telecommunication network.

If the base station BS which transferred the message received at step S600 is identified in the first list, the processor 300 moves to step S602. Otherwise, the processor 300 moves to step S603.

At step S602, the processor 300 gives access right to the mobile terminal MT to use the resources of the base station BS1 in order to access to the wireless cellular telecommunication network.

The mobile terminal MT can, through the base station BS2, establish or receive a communication with a remote telecommunication device and/or can download data and/or can notify to the core network device CN that the base station BS1 identified in its first list of at least one base station is not operational and/or can request the core network device CN to wake up the base station BS1 which is not operational.

After that, the processor 300 interrupts the present algorithm.

At next step S603, the processor 300 checks if the base station BS which transferred the message received at step S600 is identified in the second list of the mobile terminal MT which sent the message at step S507 of Fig. 5.

If the base station BS which transferred the message received at step S600 is not identified in the second list, the processor 300 moves to step S607.

At step S607, the processor 300 rejects the right to access, by the mobile terminal MT, to the wireless cellular telecommunication network through the base station BS which sent the message received at step S600.

At next step S608, the processor 300 commands the transfer of a message to the base station BS2 which transferred the message received at step S600.

The message is representative of a rejection to give right to the mobile terminal MT to use the resources of the base station BS2 in order to access to the wireless cellular telecommunication network.

After that, the processor 300 interrupts the present algorithm.

If the base station BS which transferred the message received at step S600 is identified in the second list of the mobile terminal MT, the processor 300 moves to step S604.

At step S604, the processor 300 checks if the base station BS1, identified in the first list of the mobile terminal MT, is operational or not.

The base station BS1 identified in the first list of the mobile terminal MT may be identified in the received message.

The processor 300 may identify the base station BS1 through which the mobile terminal MT is allowed to access to the wireless cellular telecommunication network by selecting among the list of at least one base station BS through which the mobile terminal MT is allowed to access to the wireless cellular telecommunication network, the base station BS1 which is neighbour from the base station BS2 which transferred the message received at step S600.

The processor 300 may check if the base station BS1 through which the mobile terminal MT is allowed to access to the wireless cellular telecommunication network is operational by checking if the base station BS responds to a message or signal transferred by the core network device CN.

The processor 300 may check if the base station BS1 through which the mobile terminal MT is allowed to access to the wireless cellular telecommunication network is operational by checking if the link S1₁ between that base station BS 1 and the core network device CN is operational.

The processor 300 may check if the base station BS1 through which the mobile terminal MT is allowed to access to the wireless cellular telecommunication network is operational by checking if the links X2₁₂ and X2₁₃ between the base station BS1 and neighbour base stations BS2 and BS3 are operational.

If the base station BS1 through which the mobile terminal MT is allowed to access to the wireless cellular telecommunication network is operational, the processor 300 moves to step S607 already disclosed.

If the base station BS1 through which the mobile terminal MT is allowed to access to the wireless cellular telecommunication network is not operational, the processor 300 moves to step S605.

At step S605, the processor 300 allows the mobile terminal MT to access to the wireless cellular telecommunication network through the base stations BS2 which transferred the message received at step S600.

The mobile terminal MT can, through the base station BS2, establish or receive a communication with a remote telecommunication device and/or can download data and/or can notify to the core network device CN that the base station BS1 identified in its first list of at least one base station is not operational and/or can request the core network device CN to wake up the base station BS1 which is not operational.

At next step S606, the processor 300 commands the transfer of a message to the base station BS2 which transferred the message received at step S600 allowing the mobile terminal MT to access to the wireless cellular telecommunication network through the base stations BS2 which transferred the message received at step S600.

After that, the processor 300 interrupts the present algorithm.

**Fig. 6b** discloses an example of an algorithm executed by a base station in order to check if a mobile terminal may access to the wireless cellular telecommunication network according to the present invention.

More precisely, the present algorithm is executed by the processor 400 of the base station BS2 which receives the message transferred by the mobile terminal MT at step S507 of Fig. 5.

At step S650, the processor 400 detects the reception of a message transferred by the mobile terminal MT at step S507 of Fig. 5.

At next step S651, the processor 400 checks if the base station BS2 is identified in the first list of at least one base station BS through which the mobile terminal MT which sent the message at step S507 of Fig. 5 is allowed to access to the wireless cellular telecommunication network.

If the base station BS2 is identified in the first list, the processor 400 moves to step S652. Otherwise, the processor 400 moves to step S653.

At step S652, the processor 400 allows the mobile terminal MT to establish or receive a communication with a remote telecommunication device through the base station BS2.

After that, the processor 400 interrupts the present algorithm.

At step S653, the processor 400 checks if the base station BS2 is identified in the second list of at least one base station BS through which the mobile terminal MT which sent the message at step S507 of Fig. 5 is allowed to access to the wireless cellular telecommunication network if the at least one base station BS through which the mobile terminal MT should access to the wireless cellular telecommunication network is not operational.

If the base station BS2 is not identified in the second list, the processor 400 moves to step S657.

At step S657, the processor 400 rejects the right to access by the mobile terminal MT to the wireless cellular telecommunication network through the base station BS2.

At next step S658, the processor 400 commands the transfer of a message to the mobile terminal MT. The message is representative of a rejection to access to the wireless cellular telecommunication network.

After that, the processor 400 interrupts the present algorithm.

If the base station BS2 is identified in the second list of the mobile terminal MT, the processor 400 moves to step S654.

At step S654, the processor 400 checks if the base station BS1 identified in the first list of the mobile terminal MT is operational or not as disclosed in the step S604 of Fig. 6a.

If the base station BS1 identified in the first list of the mobile terminal MT is operational, the processor 400 moves to step S657 already disclosed.

If the base station BS1 identified in the first list of the mobile terminal MT is not operational, the processor 400 moves to step S655.

At step S655, the processor 400 gives access right to use the resources of the base station BS2 in order to access to the wireless cellular telecommunication network.

The mobile terminal MT can, through the base station BS2, establish or receive a communication with a remote telecommunication device and/or can download data and/or can notify to the core network device CN that the base station BS 1 identified in its first list of at least one base station is not operational and/or can request the core network device CN to wake up the base station BS1 which is not operational.

At next step S656, the processor 400 commands the transfer of a message to the mobile terminal MT which transferred the message received at step S650 allowing the access to the wireless cellular telecommunication network.

After that, the processor 400 interrupts the present algorithm.

**Fig. 7** discloses an example of an algorithm executed by a base station in order to determine a second list of at least one base station according to the present invention.

More precisely, the present algorithm is executed by the processor 400 of each base station BS for each mobile terminal MT, the base station BS is identified in the first list.

The present algorithm will be disclosed when it is executed by the processor 400 of the base station BS1.

At step S700, the processor 400 determines the neighbouring conditions of the base station BS1, i.e. the base stations BS which are neighbour of the base station BS1.

For example, the processor 400 commands the wireless interface 405 to monitor the signals radiated by other base stations BS or commands the network interface 405 to indicate the links X2₁₂ X2₁₃ that exist with other base stations BS.

In a variant, the processor 400 determines the neighbouring conditions of the base station BS1 using measurement reports transferred by mobile terminals MT.

At next step S701, the processor 400 selects a base station BS identified in the neighbouring conditions determination step.

The processor 400 selects for example the base station BS2 which transfers the signals which are received by the base station BS1 with the highest power strength among the measured signals.

At next step S702, the processor 400 commands the transfer of a message to the selected base station BS through the network interface 406 and the link X2₁₂.

The message is representative of a request for agreement with the selected base station BS2.

The agreement is for example as follows:

Do you agree to be identified in the second list of the mobile terminal MT ?. In compensation, the base station BS1 agrees to be identified in the second list of the mobile terminal MT of which you are identified in the first list.

At next step S703, the processor 400 detects the reception of a response message through the network interface 406.

If the response message is representative of an agreement, the processor 400 moves to step S704. Otherwise, the processor 400 moves to step S708.

For example, the base station BS2 may accept or refuse the agreement according to its working load.

If the agreement is accepted, the base station BS1 is identified in the second list of at least one mobile terminal MT of which the base station BS2 is identified in the first list. The base station BS2 is identified in the second list of at least one mobile terminal MT of which the base station BS1 is identified in the first list.

At step S704, the processor 400 identifies the base station BS2 in the second list of at least one mobile terminal MT of which the base station BS1 is identified in the first list.

At next step S705, the processor 400 commands the transfer of a message to the core network device CN informing the modification of the or each second list.

At next step S706, the processor 400 commands the transfer of a message to each mobile terminal MT the base station BS1 is identified in the first list. The message informs the modification of the second list of the mobile terminal MT.

At next step S707, the processor 400 checks if the second list or lists needs or need to be expanded, for example according to previous experiences of power off of the neighbouring base stations BS.

If the second list or lists needs or need to be expanded, the processor 400 moves to step S708. Otherwise, the processor 400 interrupts the present algorithm.

At step S708, the processor 400 checks if there is as least one base station BS to which an agreement has not been proposed.

If there is at least one base station BS to which an agreement has not been proposed, the processor 400 moves to step S709. Otherwise, the processor 400 interrupts the present algorithm.

At step S709, the processor 400 selects another base station BS identified in the neighbouring conditions determination step and returns to step S702.

**Fig. 8** discloses an example of an algorithm executed by a core network device in order to determine a second list of at least one base station according to the present invention.

More precisely, the present algorithm is executed by the processor 300 of the core network device CN.

At step S800, the processor 300 determines the neighbouring conditions of the base stations BS1 to BS3 i.e. the base stations BS which are neighbour of the base station BS1 to BS3.

For example, the processor 300 gets from each base station BS1 to BS3, information representative of the signals radiated by other base stations BS and measured by the base stations BS1 to BS3 or get the lists of the links X2₁₂, X2₁₃ and X2₂₃ that exist between the base stations BS.

In a variant, the processor 300 determines the neighbouring conditions of the base station BS1 using measurement reports obtained from mobile terminals MT.

At next step S801, the processor 300 selects for each base station BS, at least one base station BS identified in the neighbouring conditions determination step and identifies the selected base station or base stations BS in each second list for the mobile terminal MT the first list of which identifies the base station BS.

At next step S802, the processor 300 commands the transfer of messages to the base stations BS. The messages comprise the second lists which are forwarded to the mobile terminals MT.

After that, the processor 300 interrupts the present algorithm.

**Fig. 9** discloses an example of an algorithm executed by a mobile terminal in order to determine a second list of at least one base station according to the present invention.

More precisely, the present algorithm is executed by the processor 200 of the mobile terminal MT.

At step S900, the processor 200 determines the neighbouring conditions of the base station BS1, i.e. the base stations BS which are neighbour of the base station BS1.

For example, the processor 200 commands the wireless interface 205 to monitor the signals radiated by other base stations BS when the mobile terminal MT receives signals radiated by the base station BS1 with a high power level.

According to a particular mode of realisation, the processor 200 commands the wireless interface 205 to monitor messages transferred by other base stations BS allowing the mobile terminal MT to access to the wireless cellular telecommunication network through the resources of the other base stations BS when the base station identified in the first list through which the mobile terminal should access to the wireless cellular telecommunication network is not operational.

These messages may be signalled for example through a flag in the broadcast channel of these base stations BS.

According to that mode of realisation, the processor 200 moves from step S900 to S904.

At next step S901, the processor 200 selects a base station BS identified in the neighbouring conditions determination step.

The processor 200 selects for example, the base station BS2 which transfers the signals which are received by the mobile terminal MT with the highest power strength among the signals transferred by other base stations BS2 and BS3 and/or selects the base station BS identified in the second list which has the lowest working load and/or selects the base station BS identified in the second list and which transfers the signals which are received by the mobile terminal MT with the highest quality.

At next step S902, the processor 200 commands the transfer of a message to the base station BS1 which is identified in the first list of the mobile terminal MT through the wireless interface 205.

The message is representative of a request for agreement with the selected base station BS2.

The base station BS1 may agree or not on the agreement. The agreement is for example as the one disclosed at step S702 of Fig. 7.

At next step S903, the processor 200 detects the reception of a response message through the wireless interface 205.

If the response message is representative of an agreement, the processor 200 moves to step S904. Otherwise, the algorithm moves to step S906.

For example, the base station BS1 may accept or refuse the agreement according to its working load.

At step S904, the processor 200 inserts the base station BS2 in the second list of the mobile terminal MT.

At next step S905, the processor 200 commands the transfer of a message to the core network device CN informing the modification of the second list.

After that, the processor 200 interrupts the present algorithm.

At step S906, the processor 200 commands the transfer of a message to the core network device CN requesting the core network device CN to determine a second list for the mobile terminal MT.

Naturally, many modifications can be made to the embodiments of the invention described above without departing from the scope of the present invention.

## Claims

1. Method for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the method comprises the steps of:
- detecting the reception of a message transferred by the mobile terminal to a base station through which the mobile terminal requests access to the wireless cellular telecommunication network,
- determining if the base station which received the message is identified in a first list of at least one base station through which the mobile terminal can access to the wireless cellular telecommunication network or in a second list of at least one base station through which the mobile terminal can access to the wireless cellular telecommunication network,
- giving to the mobile terminal access right to the wireless cellular telecommunication network through the base station which received the message if the base station which received the message is identified in the second list and if each base station identified in the first list and through which the mobile terminal should access to the wireless cellular telecommunication network is not operational,
- rejecting the access right to the mobile terminal to the wireless cellular telecommunication network through the base station which received the message if the base station which received the message is identified in the second list and if at least one base station identified in the first list and through which the mobile terminal should access to the wireless cellular telecommunication network is operational.

2. Method according to claim 1, **characterised in that** the first list comprises plural base stations and **in that** the method comprises further step of determining the at least one base station of the first list which is not operational and through which the mobile terminal should access to the wireless cellular telecommunication network, by reading information identifying the at least one base station which is not operational in the message received by the base station or using information representative of the neighbouring between the base station which received the message and base stations identified in the first list.

3. Method according to claim 1 or 2, **characterised in that** the wireless cellular telecommunication network comprises a core network device and **in that** the method is executed by the core network device.

4. Method according to claim 1 or 2, **characterised in that** the method is executed by the base station which receives the message.

5. Method according to any of the claims 1 to 4, **characterised in that** the method comprises further step of determining, for the mobile terminal, the second list of at least one base station through which the mobile terminal can access to the wireless cellular telecommunication network, and **in that** the determination step of the second list is executed by the core network device or by at least one base station identified in the first list.

6. Method according to any of the claims 1 to 4, **characterised in that** the method comprises further step, executed by at least one base station of transferring a message indicating that the base station gives to the mobile terminal access right to the wireless cellular telecommunication network if each base station identified in the first list and through which the mobile terminal should access to the wireless cellular telecommunication network is not operational.

7. Method for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the method comprises the steps, executed by the mobile terminal of :
- checking if signals that may be transferred by at least one base station through which the mobile terminal should access to the wireless cellular telecommunication network are received, the at least one base station being identified in a first list identifying at least one base station through which the mobile terminal should access to the wireless cellular telecommunication network,
- measuring signals transferred by at least one base station identified in a second list of at least one base station through which the mobile terminal can access to the wireless cellular telecommunication network,
- transferring a message to one base station identified in the second list which transfers measured signals if the signals that may be transferred by the at least one base station identified in the first list through which the mobile should access to the wireless cellular telecommunication network are not received, the message requesting an access right to the wireless cellular telecommunication network through the base station to which the message is transferred,
- accessing to the wireless cellular telecommunication network through the base station to which the message is transferred.

8. Method according to the claim 7, **characterised in that** the method comprises further step, executed prior to the access to the wireless cellular network of receiving a message allowing the mobile terminal to access to the wireless cellular telecommunication network through the base station to which the message is transferred.

9. Method according to the claim 7 or 8, **characterised in that** the method comprises further step of determining, by the mobile terminal, the second list of at least one base station through which the mobile terminal can access to the wireless cellular telecommunication network.

10. Method according to claim 9, **characterised in that** the mobile terminal determines the second list of at least one base station through which the mobile terminal can access to the wireless cellular telecommunication network by identifying each base station which transfers a message indicating that the mobile terminal may have access right to the wireless cellular telecommunication network through the base station which transfers the message if each base station identified in the first list and through which the mobile terminal should access to the wireless cellular telecommunication network is not operational.

11. Device for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the device for enabling a mobile terminal to access to a wireless cellular telecommunication network comprises :
- means for detecting the reception of a message transferred by the mobile terminal to a base station through which the mobile terminal requests access to the wireless cellular telecommunication network,
- means for determining if the base station which received the message is identified in a first list of at least one base station through which the mobile terminal can access to the wireless cellular telecommunication network or in a second list of at least one base station through which the mobile terminal can access to the wireless cellular telecommunication network,
- means for giving to the mobile terminal access right to the wireless cellular telecommunication network through the base station which received the message if the base station which received the message is identified in the second list and if each base station identified in the first list and through which the mobile terminal should access to the wireless cellular telecommunication network is not operational,
- means for rejecting the access right to the mobile terminal to the wireless cellular telecommunication network through the base station which received the message if the base station which received the message is identified in the second list and if at least one base station identified in the first list and through which the mobile terminal should access to the wireless cellular telecommunication network is operational.

12. Device for enabling a mobile terminal to access to a wireless cellular telecommunication network comprising plural base stations, the mobile terminal being allowed to access to the wireless cellular telecommunication network through base stations, the mobile terminal being not allowed to access to the wireless cellular telecommunication network through other base stations, **characterised in that** the device enabling a mobile terminal to access to a wireless cellular telecommunication network is included in the mobile terminal and comprises:
- means for checking if signals that may be transferred by at least one base station through which the mobile terminal should access to the wireless cellular telecommunication network are received, the at least one base station being identified in a first list identifying at least one base station through which the mobile terminal should access to the wireless cellular telecommunication network,
- means for measuring signals transferred by at least one base station identified in a second list of at least one base station through which the mobile terminal can access to the wireless cellular telecommunication network,
- means for transferring a message to one base station identified in the second list which transfers measured signals if the signals that may be transferred by the at least one base station identified in the first list through which the mobile should access to the wireless cellular telecommunication network are not received, the message requesting an access right to the wireless cellular telecommunication network through the base station to which the message is transferred,
- means for accessing to the wireless cellular telecommunication network through the base station to which the message is transferred.

13. Computer program which can be directly loadable into a programmable device, comprising instructions or portions of code for implementing the steps of the method according to claims 1 to 6, when said computer program is executed on a programmable device.

14. Computer program which can be directly loadable into a programmable device, comprising instructions or portions of code for implementing the steps of the method according to claims 7 to 10, when said computer program is executed on a programmable device.
